(19) Europäisches Patentamt
European Patent Office
Office européen des brevets

(11) Numéro de publication: **0 149 398 B1**

# (12) FASCICULE DE BREVET EUROPEEN

(45) Date de publication du fascicule du brevet: **11.05.88**

(51) Int. Cl.⁴: **G 02 F 1/137**, G 02 F 1/133

(21) Numéro de dépôt: **84402733.4**

(22) Date de dépôt: **27.12.84**

## (54) Dispositif de visualisation à mémoire utilisant un matériau ferroélectrique.

(30) Priorité: **03.01.84 FR 8400029**

(43) Date de publication de la demande: **24.07.85 Bulletin 85/30**

(45) Mention de la délivrance du brevet: **11.05.88 Bulletin 88/19**

(84) Etats contractants désignés: **DE GB NL SE**

(56) Documents cités:
**EP - A - 0 032 362**
**EP - A - 0 062 499**
**EP - A - 0 092 181**
**EP - A - 0 149 899**

**APPLIED PHYSICS LETTERS, vol. 43, no. 4, 15 août 1983, pages 342-344, American Institute of Physics, New York, US; R.B. MEYER et al.: "Discovery of dc switching of a bistable boundary layer liquid crystal display"**
**MOLECULAR CRYSTALS AND LIQUID CRYSTALS, vol. 40, 1977, pages 33-48, Gordon and Breach Science Publishers Ltd., NL; R.B. MEYER: "Ferroelectric liquid crystals; a review"**

(73) Titulaire: **THOMSON-CSF, 173, Boulevard Haussmann, F-75379 Paris Cédex 08 (FR)**

(72) Inventeur: **Mourey, Bruno, THOMSON-CSF SCPI - 173, bld Haussmann, F-75379 Paris Cedex 08 (FR)**
Inventeur: **Hareng, Michel, THOMSON-CSF SCPI - 173, bld Haussmann, F-75379 Paris Cedex 08 (FR)**
Inventeur: **Le Pesant, Jean-Pierre, THOMSON-CSF SCPI - 173, bld Haussmann, F-75379 Paris Cedex 08 (FR)**
Inventeur: **Perbet, Jean-Noel, THOMSON-CSF SCPI - 173, bld Haussmann, F-75379 Paris Cedex 08 (FR)**

(74) Mandataire: **Lepercque, Jean et al, THOMSON-CSF SCPI 19, avenue de Messine, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

L'invention se rapporte aux dispositifs de visualisation à mémoire du type à adressage matriciel et utilisant des cristaux liquides smectiques ferroélectriques pour lesquels un effet mémoire est obtenu à l'aide d'un champ électrique stabilisateur.

Les cristaux liquides occupent aujourd'hui une place très importante dans le domaine des dispositifs de visualisation. Ceci est dû en particulier aux effets électrooptiques procurés par les cristaux liquides du type nématique en hélice. Le grand succès de cet effet réside dans sa simplicité de mise en œuvre, ses faibles tensions de commande et sa faible consommation. Le principal inconvénient de ces dispositifs est que, malgré de très nombreuses recherches dans ce domaine, son taux de multiplexage semble limité à une centaine. Ceci est un handicap certain dans l'utilisation de cet effet pour les écrans matriciels à forte définition, par exemple comprenant plusieurs dizaines de lignes de caractères. Aussi les recherches se sont-elles tournées vers des effets électrooptiques à mémoire pour lesquels le taux de multiplexage est théoriquement infini.

Les taux de multiplexage ont été sensiblement augmentés par l'utilisation de solutions que l'on peut classer en deux familles. Une première famille regroupe les dispositifs comprenant une matrice à commande intégrée dans laquelle chaque élément d'image est mis en série avec un élément non linéaire du type varistance, transistor en couche mince, diodes montées en série et en opposition, etc... Une seconde famille de solutions regroupe les dispositifs qui utilisent des matériaux possédant un effet électrooptique à mémoire. Parmi les dispositifs de cette seconde famille, on peut mentionner ceux utilisant l'effet mixte thermique et électrique dans les cristaux liquides smectiques. On peut également citer ceux qui utilisent les effets du champ électrique sur une texture hybride dans un nématique et qui ont fait l'objet d'une demande de brevet de la Demanderesse portant le numéro FR-A-2 546 324.

Les effets électrooptiques observés dans les cristaux liquides smectiques ferroélectriques offrent une solution intéressante aux problèmes des effets à mémoire intrinsèque. Les études menées dans de nombreux laboratoires ont montré que l'on pouvait obtenir un effet électrooptique par retournement de la polarisation de domaines ferroélectriques dans des phases smectiques ferroélectriques. Par rapport aux smectiques A dans lesquels les molécules sont normales aux plans des couches smectiques, les molécules des cristaux liquides smectiques ferroélectriques présentent en général une inclinaison par rapport aux plan des couches. Il se produit également une rotation de la direction d'inclinaison de ces molécules autour de la normale au plan des couches et ceci selon une hélice de faible pas (quelques micromètres).

CLARK et LAGERWALL ont montré, dans la demande de brevet européen EP-A-0 032 362, qu'avec des cellules de faible épaisseur, il est possible d'induire deux directions stables d'orientation des molécules de cristal liquide qui peuvent constituer des domaines d'axes optiques et de polarisations opposés. La commutation entre ces deux directions se fait par application d'un champ électrique approprié. Ces cellules, utilisées comme valves optiques élémentaires, ont pour principales caractéristiques: d'être des systèmes bistables donc à mémoire, de posséder de faibles temps de réponse, de demander de faibles tensions de commande et de présenter une faible consommation d'énergie.

Un tel dispositif, utilisant en outre un champ électrique alternatif de maintien de la texture, est décrit dans la demande de brevet européen EP-A-0 149 899 (état de la technique selon article 54 (3) de la C.B.E.).

Cependant, ce type de dispositif présente deux inconvénients majeurs. Premièrement, il nécessite un traitement de surface réalisé sur les deux faces internes des lames supports de la cellule qui doit conduire à une énergie équivalente pour les deux textures (correspondant aux deux directions stables d'orientation des molécules) afin que celles-ci puissent exister simultanément en l'absence de champ électrique appliqué. Ce traitement doit cependant permettre le glissement des molécules en surface lors de la commutation d'une texture vers une autre. Un traitement de surface présentant ces deux propriétés est très difficile à réaliser de façon reproductible. Deuxièmement, ces dispositifs nécessitent le blocage par des surfaces limites de l'hélice due à la chiralité des molécules de cristal liquide ferro-électrique et imposent en conséquence des épaisseurs très faibles à la couche de cristal liquide. Ces épaisseurs (inférieures à 3 micromètres) sont très difficiles à obtenir industriellement sur de grandes surfaces.

Afin de pallier ces inconvénients, la présente invention propose de maintenir les états stables qui sont induits dans la couche de cristal liquide ferroélectrique par un champ électrique continu, non par des contraintes d'épaisseur et d'ancrage, mais par un champ électrique alternatif de blocage.

L'invention a donc pour objet un dispositif de visualisation d'informations à mémoire et à commande électrique comportant une cellule comprenant un film de matériau à cristal liquide chiral du type smectique C ou H possédant des propriétés ferroélectriques, ledit film étant disposé entre deux lames parallèles et transparentes, chacune desdites lames supportant sur sa face interne au moins une électrode transparente permettant l'application d'un champ électrique dans au moins une région dudit film, lesdites lames ayant reçu des traitements de surface qui donnent une orientation planaire aux molécules adjacentes du film, ledit dispositif comportant des moyens de suppression de la structure en hélice du film et de création de deux textures décelables dans le film, et des moyens de création d'un champ électrique continu qui sélectionne en fonction de son signe, l'une des deux textures, caractérisé en ce que le cristal liquide possède une anisotropie diélectrique négative, que l'écartement entre les deux lames est supérieur à l'écartement critique au dessous duquel l'hélice du cristal liquide est supprimée, et que le dispositif comporte en outre des moyens de création d'un champ électrique alternatif de maintien de la texture sélectionnée précédemment en l'absence du champ alternatif, la fréquence de ce champ étant supérieure à la fréquence de relaxation dudit matériau à cristal liquide.

L'invention sera mieux comprise et d'autres avantages apparaîtront au moyen de la description qui va suivre et des figures annexées parmi lesquelles:

- les figures 1 et 2 sont des figures explicatives,
- la figure 3 est une représentation connue d'un cristal liquide ferroélectrique,
- les figures 4 et 5 sont des vues partielles d'une cellule à cristal liquide ferroélectrique,
- la figure 6 est une vue isométrique d'un écran de visualisation,
- les figures 7 à 9 sont illustratives du principe d'adressage selon l'invention.

Dans un article publié dans Le Journal de Physique, volume 36 (1975, L 69), MEYER et al ont montré que des cristaux liquides tels que les smectiques C et H chiraux étaient ferroélectriques. Dans ces matériaux, les dipôles électriques p sont perpendiculaires à la direction des molécules et parallèles au plan des couches smectiques. La chiralité confère à ces matériaux une structure hélicoïdale telle qu'à l'échelle macroscopique la polarisation résultante est nulle par symétrie de révolution. La polarisation n'apparaît alors qu'après la destruction de l'hélice. La polarisation spontanée dans ces phases n'est pas due au champ électrique $\vec{E}$ appliqué de sorte que le couplage entre le champ E et l'orientation des molécules est linéaire, à la différences des matériaux diélectriques où le couplage est quadratique. Pour les cristaux liquides ferroélectriques, le couplage dépend donc du sens du champ électrique appliqué. De plus, à faible champ $\vec{E}$, ce couplage semble plus important que celui dû à l'anisotropie diélectrique des cristaux liquides. MARTINO-LAGARDE a étudié le retournement de ces dipôles ferroélectriques sous un champ électrique appliqué (Le Journal de Physique, volume 38, janvier 1977, pages L 17 à L 19). Il a donné la première mesure directe de la polarisation permanente $\vec{p}$, sa variation avec la température et le temps de retournement des dipôles.

On va tout d'abord donner une explication du symbolisme généralement employé pour représenter les différentes positions des molécules d'un cristal liquide ferroélectrique du type smectique C chiral.

Les figures 1 et 2 sont des figures explicatives du symbolisme employé. Pour figurer la structure en hélice qui régit l'ordonnancement des matériaux considérés, on a représenté un modèle formé de cônes identiques 1 et 2 alignés qui se touchent par leurs sommets. L'agencement spatial des molécules est tel qu'elles peuvent être représentées comme des génératrices du modèle susceptibles de couvrir, en pivotant autour du sommet commun, l'enveloppe des deux cônes. Pour situer la position d'une molécule dans l'espace, le symbolisme des clous est le plus indiqué. Ainsi, à la figure 1 une molécule située sur la génératrice 3 sera représentée dans les plans xOz et xOy, appartenant à un trièdre orthonormé Oxyz, respectivement par les clous 4 et 5. La tête du clou signifie que la partie correspondante de la molécule est située en avant pour l'observateur du dessin. C'est ce qui explique que les clous sont dirigés différemment pour les plans xOz et xOy selon que l'on examine le modèle de face ou par le dessus.

Dans la figure 2, la molécule représentée est située selon la génératrice 6, c'est-à-dire dans le plan xOz; dans ce cas le symbolisme du clou n'a plus de raison d'être et la droite 7 est suffisante. Par contre, la molécule s'enfonce de biais dans le plan xOy comme le montre le clou 8.

La figure 3 est une représentation connue d'un cristal liquide chiral du type smectique C ou H. Elle s'inspire des enseignements donnés par les figures 1 et 2. Le cristal liquide est formé de couches. Dans chaque couche, la direction moyenne des molécules est donnée par le vecteur unité 3$\hat{n}$ représenté par un clou ou une droite suivant le cas. La suite de cônes 11 située à gauche de la figure permet de comprendre l'évolution de la direction des molécules lorsque l'on passe d'une couche à une autre. Les cônes sont alignés selon une droite passant par leurs sommets et perpendiculaire au plan de couches. Les molécules 12 à 24 sont inclinées d'un angle $\psi_o$ par rapport à cette droite. Chaque molécule possède un dipôle électrique $\vec{p}$ qui est perpendiculaire au grand axe des molécules et parallèle aux couches 10. Du fait de la structure en hélice des molécules, les dipôles électriques peuvent prendre toutes les directions possibles dans le plan des couches. C'est ce qui fait qu'à l'échelle macroscopique la polarisation résultante est nulle.

Des positions particulières des molécules sont à considérer: ce sont les positions des molécules 12, 18 et 24 dont les dipôles électriques sont susceptibles de présenter des directions perpendiculaires à des lames d'encadrement situées dans des plans parallèles à xOz. Ces directions seront appelées par la suite $+\theta$ ou $-\theta$ suivant le signe du dipôle et seront représentatives de l'effet bistable.

Pour pouvoir se servir de matériaux tels que les cristaux liquides smectiques C ou H chiraux dans des cellules présentant un effet bistable, CLARK er LAGERWALL, dans la demande de brevet citée, ont été amenés à supprimer la structure en hélice de ces matériaux. La suppression de la structure en hélice a été obtenue de la manière suivante. L'épaisseur de la couche de cristal liquide dans la cellule est choisie suffisamment faible (de l'ordre de 1,5 micromètre) pour empêcher, compte tenu des conditions d'orientation aux limites, l'établissement d'une hélice. Ces conditions d'épaisseur et d'orientation induisent deux états ou textures stables possibles. Ces textures ont une polaraisation macroscopique non nulle.

La figure 4 est une vue partielle d'une cellule à cristal liquide. Le cristal liquide 30 est confiné entre deux lames 31 et 32 dont les faces internes ont été traitées pour donner une orientation préférentielle aux molécules situées à proximité. Les autres molécules s'orientent selon le schéma de la figure 3. La polarisation macroscopique due aux dipôles électriques est nulle. La structure en hélice persiste tant que la distance h entre les lames 31 et 32 est supérieure au pas de l'hélice (environ 3 µm).

La figure 5 représente le même type de cellule que précédemment mais pour une distance h inférieure au pas de l'hélice. L'établissement d'une structure en hélice n'est alors plus possible et les molécules s'orientent de façon à ce que, pour chaque couche smectique la polarisation électrique soit dans un sens ou dans le sens directement opposé. La répartition des dipôles électriques devient aléatoire. En fait, ce sont des zones entières qui présentent une polarisation suivant l'un ou l'autre sens. C'est ce que représente la figure 5 où l'on voit que la polarisation globale $\vec{P_1}$ de la zone 33 a un signe opposé à la polarisation $\vec{p_2}$ du reste visible de la cellule.

L'application au cristal liquide 30 d'un champ électrique continu $\vec{E}$, positif ou négatif et perpendiculaire aux lames 31 et 32, fait basculer l'ensemble de la structure par couplage entre le champ $\vec{E}$ et la polarisation $\vec{P}$ du cristal liquide. Lorsque l'on coupe le champ électrique, la texture que l'on a priviligiée, suivant le signe du champ $\vec{E}$ se maintient. Il s'agit donc bien d'un effet mémoire qui subsiste à cause des contraintes d'épaisseur et d'ancrage imposées.

La lecture optique de l'effet peut se faire de deux manières. On peut placer la cellule entre polariseurs croisés et travailler en biréfringence. On peut aussi incorporer un colorant dichroïque dans le cristal liquide ferroélictrique et dans ce cas, un seul polariseur suffit. La lumière de direction de polarisation parallèle aux molécules de colorant est alors absorbée tandis que celle de direction de polarisation perpendiculaire ne l'est pas.

L'invention propose de s'affranchir des containtes d'épaisseur et d'ancrage par l'utilisation de deux types d'effet du champ électrique sur les cristaux liquides ferroélectriques. Un premier effet, linéaire en champ électrique, est dû au couplage $\vec{P}.\vec{E}$ cité plus haut. Un second effet, quadratique en champ électrique, est dû au couplage diélectrique que l'on rencontre dans tous les cristaux liquides. C'est l'anisotropie $\Delta\varepsilon$ des constantes diélectriques qui est responsable du second effet. L'anisotropie $\Delta\varepsilon$ est la différence entre la permittivité diélectrique parallèle à la normale aux plans des couches ($\varepsilon_{//}$) et la permittivité diélectrique perpendiculaire à cette normale ($\varepsilon_{\perp}$). Lorsque l'anisotropie $\Delta\varepsilon$ est positive, les molécules du cristal liquide s'orientent parallèlement au champ électrique. Lorsque $\Delta\varepsilon$ est négative, les molécules de cristal liquide s'orientent perpendiculairement au champ électrique. Un champ électrique basse-fréquence, c'est-à-dire continu ou de fréquence inférieure à la fréquence de relaxation des molécules du cristal liquide, implique un couplage linéaire prépondérant. Pour un champ électrique haute-fréquence, c'est-à-dire de fréquence supérieure à la fréquence de relaxation, c'est le couplage diélectrique qui sera prépondérant.

Ce comportement en fréquence est utilisé dans l'invention pour stabiliser les deux textures déterminant le fonctionnement bistable. Il est nécessaire que le cristal liquide ferroélectrique possède une anisotropie diélectrique négative afin que les molécules s'orientent perpendiculairement au champ électrique.

Le cristal liquide utilisé peut par exemple être le 4'n-heptyloxyphényl-(4"méthylhexyloxy) benzoate dont la formule est la suivante:

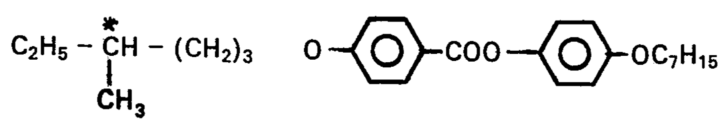

et qui présente les transitions de phases suivantes:

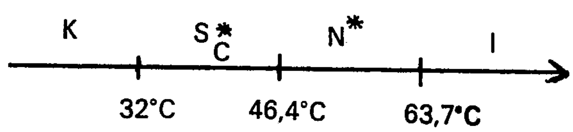


Des cristaux liquides smectiques chiraux ou des mélanges de même type qui présentent d'autres transitions de phases peuvent bien sûr être employés, par exemple ceux qui présentent les successions de phases suivantes: $K-S^*_C-S_AN^*-I$, $K-S^*_C-S_A-I$, $K-S^*_C-I$. La présence, parmi les successions de phases, d'une phase cholestérique facilite l'ordonnancement des molécules. La présence d'une phase smectique A facilite l'agencement des couches de cristal liquide. On peut également utiliser d'autres matériaux ferroélectriques tels que les cristaux liquides smectiques H chiraux.

La cellule élémentaire permettant la mise en œuvre de l'invention est constituée de deux lames transparentes, par exemple en verre, recouvertes sur leur face interne d'électrodes conductrices transparentes enserrant le cristal liquide ferroélectrique. Pour avoir une texture uniforme, il est nécessaire de traiter les faces internes de la cellule. Ceci peut être réalisé par le dépôt d'une couche d'alignement donnant une orientation planaire aux molécules. De la sorte, les molécules de cristal liquide seront, en surface, parallèles aux lames de verre et les plans des couches smectiques seront perpendiculaires à ces lames. L'écartement entre

les deux lames est choisi supérieur à l'écartement critique en deçà duquel la structure en hélice n'existe plus. Le cristal liquide présente alors à l'intérieur de la cellule une structure en hélice orientée parallèlement aux lames de verre dans une direction donnée.

Le cristal liquide est de préférence introduit entre les deux lames tandis qu'il est en phase isotrope. Lors du retour à la température ambiante, les molécules s'ordonnent en fonction des différentes phases traversées. Pour améliorer l'orientation des couches smectiques, un léger cisaillement, consistant en un glissement très faible des lames d'encadrement l'une par rapport à l'autre, peut être effectué lors de la transition nématique-smectique C* ou lors de la transition smectique A-smectique C*, lorsque ces transitions existent.

L'application d'un champ électrique haute-fréquence sur une couche de cristal liquide d'anisotropie $\Delta\varepsilon$ négative oriente les molécules de ce cristal liquide dans une direction parallèle aux lames d'encadrement. Il y a donc déroulement de l'hélice et pivotement des molécules autour d'un cône d'axe parallèle aux lames. Le champ haut-fréquence a le même effet de blocage de l'hélice que la contrainte d'épaisseur utilisée dans l'art connu. C'est la mise en œuvre de cet effet qui fait l'objet de l'invention. Afin de choisir l'un des deux états ou textures $+\theta$ ou $-\theta$ précédemment défini, on applique un champ continu qui induit la texture désirée. Un champ électrique alternatif est ensuite appliqué pour maintenir l'état obtenu. La mémoire de l'effet est donc obtenue à l'aide d'un champ haute-fréquence stabilisant.

Le couplage ferroélectrique n'agit qu'en l'absence du champ électrique haute-fréquence. Le champ électrique haute-fréquence de maintien de l'état choisi peut coexister avec un champ électrique continu.

Un dispositif de visualisation mettant en œuvre l'invention est par exemple représenté par un écran comprenant un film de cristal liquide ferroélectrique placé entre deux lames de verre recouvertes sur leur face interne d'électrodes de lignes et de colonnes constituées d'une couche mince d'un matériau conducteur transparent gravée selon les techniques classiques. Ce matériau peut être de l'oxyde mixte d'indium et d'étain.

La figure 6 représente une vue isométrique d'un écran de visualisation tel qu'il vient d'être défini. On distingue les deux lames de verre 40 et 41 qui supportent respectivement des électrodes de colonnes 42 et des électrodes de lignes 43. L'espace défini entre les lames 40 et 41 par des cales d'épaisseur non représentées est de l'ordre d'une dizaine de micromètres. Cet espace est rempli par un film de cristal liquide ferroélectrique 44, par exemple le 4'n-heptyloxyphényl-(4"methylhexyloxy) benzoate dont la formule et le diagramme de phases ont été donnés plus haut. Sur les faces internes du dispositif, on a déposé une couche d'alignement donnant une orientation planaire aux molécules du cristal liquide. Le cristal liquide est ainsi formé de couches perpendiculaires aux lames 40 et 41. La couche d'alignement est par exemple constituée par une évaporation oblique d'oxyde de silicium SiO ou d'une couche de polymère organique frotté ou non. L'épaisseur du film 44 n'est pas prépondérante, le maintien des deux textures $+\theta$ et $-\theta$ se faisant par couplage diélectrique et non par une contrainte d'épaisseur. Une épaisseur d'environ 10 micromètres est satisfaisante pour des raisons technologiques.

La lecture optique des deux textures $+\theta$ et $-\theta$ se fait comme précédemment: soit en plaçant le dispositif de la figure 6 entre polariseurs croisés et en travaillant en biréfringence, soit en incorporant au cristal liquide un colorant dichroïque. Pour l'épaisseur du film envisagée dans le dispositif selon l'invention, l'utilisation de colorants dichroïques et d'un polariseur est préférable. En effet, la lecture optique par biréfringence est très sensible aux variations d'épaisseur.

Les figures 7, 8 et 9 sont illustratives du principe d'adressage. Pour des commodités d'explication, on n'a représenté sur ces figures que les électrodes de lignes 60 à 62 et de colonnes 50 à 52 d'un dispositif d'affichage. L'état de la texture $+\theta$ et $-\theta$ est représenté, comme à la figure 5, par des petits bâtons inclinés soit dans un sens, soit dans l'autre. A la figure 7, on part d'un état inscrit quelconque où l'on a par exemple une texture $+\theta$ pour les éléments d'image correspondant aux croisements des électrodes 50 et 60, 51 et 60, 61 et 51, 62 et 52. Aux autres éléments d'image correspond une texture $-\theta$. Le dispositif étant dans un état inscrit quelconque, les tensions continues fournies sur les électrodes de colonnes par le générateur 70 sont nulles. Le générateur 71 fournit des tensions alternatives v qui assurent l'existence de champs alternatifs de maintien des textures $+\theta$ ou $-\theta$. La continuité électrique de l'ensemble est assurée par les masses des générateurs 70 et 71. Pour adresser par exemple la ligne 61, il faut d'abord supprimer le champ électrique alternatif (dit champ haute fréquence) de maintien des textures qui agit entre l'électrode 61 et les électrodes 50, 51 et 52. C'est ce qu'indique la figure 7.

L'inscription de l'information est ensuite réalisée par l'application sur les électrodes de colonnes de potentiels de signes déterminés suivant les textures désirées. Dans l'exemple choisi à la figure 8, l'électrode 50 est portée au potentiel $+V$ et les électrodes 51 et 52 au potentiel $-V$. Dans cette étape de l'inscription, il n'y a pas de champ haute-fréquence entre l'électrode 61 et les électrodes 50, 51 et 52.

A la figure 9, les potentiels continus sont supprimés et un champ haute-fréquence de maintien de l'information est appliqué entre l'électrode 61 et les électrodes 50, 51 et 52. Une autre ligne peut alors être adressée. Il est préférable de réaliser les étapes 7 et 8 en même temps. Les étapes représentées par les figures 7, 8 et 9 doivent être exécutées chaque fois que l'on désire changer les informations mémorisées sur une ligne.

Cette manière d'assurer l'adressage est due à l'effet de découplage qu'apporte la réponse en fréquence du cristal liquide ferroélectrique. Dans l'exemple choisi, on a appliqué sur les électrodes

de lignes de l'écran une tension haute-fréquence de maintien de l'information et sur les électrodes de colonnes des tensions positives ou négatives d'inscription de l'information. On peut bien sûr sans problème adresser l'écran colonne par colonne plutôt que ligne par ligne. Le rôle du champ haute-fréquence n'est pas perturbé par la présence de champs continus, toutes proportions gardées. Par conséquent, les informations mémorisées ne seront pas perturbées par les tensions d'adressage de la deuxième étape du cycle d'adressage.

Les tensions continues utilisées peuvent être de l'ordre de V = 10 à 100 volts. L'amplitude des tensions alternatives peut être de l'ordre de quelques dizaines de volts pour une fréquence de quelques kilohertz. La vitesse d'adressage dépend de l'amplitude de la tension continue d'adressage et augmente avec celle-ci. Cependant, l'écart entre les amplitudes des tensions continues et sinusoïdales ne doit pas être trop grand sinon il y aurait un risque de voir les points mémorisés influencés par une tension continue d'adressage trop forte. Il est à remarquer également que les dispositifs selon l'invention ne sont pas consommateurs d'énergie.

## Revendications

1. Dispositif de visualisation d'informations à mémoire et à commande électrique comportant une cellule comprenant un film de matériau à cristal liquide chiral du type smectique C ou H (44) possédant des propriétés ferroélectriques, ledit film étant disposé entre deux lames parallèles et transparentes (40 et 41), chacune desdites lames supportant sur sa face interne au moins une électrode transparente permettant l'application d'un champ électrique dans au moins une région dudit film, lesdites lames ayant reçu des traitements de surface qui donnent une orientation planaire aux molécules adjacentes du film, ledit dispositif comportant des moyens de suppression de la structure en hélice du film et de création de deux textures décelables dans le film, et des moyens de création d'un champ électrique continu qui sélectionne en fonction de son signe, l'une des deux textures, caractérisé en ce que le cristal liquide possède une anisotropie diélectrique négative, que l'écartement entre les deux lames est supérieur à l'écartement critique au dessous duquel l'hélice du cristal liquide est supprimée, et que le dispositif comporte en outre des moyens de création d'un champ électrique alternatif de maintien de la texture sélectionnée précédemment en l'absence du champ alternatif, la fréquence de ce champ étant supérieure à la fréquence de relaxation dudit matériau à cristal liquide.

2. Dispositif de visualisation selon la revendication 1, caractérisé en ce qu'il comporte en outre des moyens optiques permettant de déceler les textures induites.

3. Dispositif de visualisation selon la revendication 2, caractérisé en ce que lesdits moyens optiques comprennent des polariseurs croisés placés de part et d'autre de la cellule, la lecture se faisant par biréfringence.

4. Dispositif de visualisation selon la revendication 2, caractérisé en ce que lesdits moyens optiques comprennent un colorant dichroique dissout dans ledit matériau à cristal liquide et un polariseur.

5. Dispositif de visualisation selon l'une quelconque des revendications 1 à 4, caractérisé en ce que les électrodes desdites lames sont disposées en lignes (43) et en colonnes (42) pour définir une matrice d'adressage.

## Patentansprüche

1. Vorrichtung zur Sichtdarstellung von Informationen mit Speichereffekt und elektrischer Steuerung, versehen mit einer Zelle, welche einen Film aus Flüssigkristallmaterial mit Spiralstruktur vom smektischen Typ C oder H (44) umfasst, welches ferroelektrische Eigenschaften aufweist, wobei dieser Film zwischen zwei parallelen und transparenten Platten (40 und 41) angeordnet ist, wobei ferner jede dieser Platten auf ihrer Innenfläche wenigstens eine transparente Elektrode trägt, die das Anliegen eines elektrischen Feldes in wenigstens einem Gebiet dieses Filmes ermöglicht, wobei die genannten Platten Oberflächenbehandlungen erfahren haben, die den an den Film angrenzenden Molekülen eine ebene Orientierung verleihen, wobei weiterhin die Vorrichtung Mittel zur Unterdrückung der Schraubenstruktur des Films und zur Erzeugung von zwei wahrnehmbaren Texturen in dem Film sowie Mittel zur Erzeugung eines elektrischen Gleichfeldes umfasst, welches in Abhängigkeit von seinem Vorzeichen eine der beiden Texturen auswählt, dadurch gekennzeichnet, dass der Flüssigkristall eine negative dielektrische Anisotropie besitzt, dass der Abstand zwischen den beiden Platten grösser als der kritische Abstand ist, unterhalb welchem die Schraube des Flüssigkristalls unterdrückt wird, und dass die Vorrichtung ferner Mittel zur Erzeugung eines elektrischen Wechselfeldes zum Aufrechterhalten der zuvor ausgewählten Textur bei Abwesenheit des Wechselfeldes umfasst, wobei die Frequenz dieses Feldes grösser als die Relaxationsfrequenz des genannten Flüssigkristallmaterials ist.

2. Vorrichtung zur Sichtdarstellung nach Anspruch 1, dadurch gekennzeichnet, dass sie ferner optische Mittel enthält, die es ermöglichen, die induzierten Texturen wahrzunehmen.

3. Vorrichtung zur Sichtanzeige nach Anspruch 2, dadurch gekennzeichnet, dass die optischen Mittel gekreuzte Polarisatoren umfassen, welche beiderseits der Zelle angeordnet sind, wobei das Auslesen durch Doppelbrechung erfolgt.

4. Vorrichtung zur Sichtdarstellung nach Anspruch 2, dadurch gekennzeichnet, dass die genannten optischen Mittel einen in dem Flüssigkristallmaterial aufgelösten dichroitischen Farbstoff und einen Polarisator umfassen.

5. Vorrichtung zur Sichtdarstellung nach einem der Ansprüche 1 bis 4, dadurch gekennzeichnet, dass die Elektroden der genannten Platten in Zeilen (43) und Spalten (42) zur Bildung einer Adressiermatrix angeordnet sind.

**Claims**

1. Device for visualization of information with memory effect and electric control, comprising a cell having a film of liquid crystal material of spiral smectic C or H type (44) having ferroelectric properties, said film being arranged between two parallel and transparent sheets (40 and 41), each of said sheets carrying on its inner face a least one transparent electrode permitting the application of an electric field within at least one region of said film, said sheets having received surface treatments which impart a planar orientation to the molecules adjacent to the film, said device comprising means for eliminating the helix structure of the film and generating two perceptible structures in the film, and means for generating an electric continuous field which selects one of the two textures according to its sign, characterized in that the liquid crystal has a dielectric negative anisotropy, that the spacing between the two sheets exceeds the critical spacing wherebelow said helix of the liquid crystal is eliminated, and in that the device further comprises means for generating an alternating electric field for maintaining the previously selected texture in the absence of the alternating field, the frequency of this field exceeding the relaxation frequency of said liquid crystal material.

2. Visualization device according to claim 1, characterized in that it further comprises optical means permitting to perceive the induced textures.

3. Visualization device according to claim 2, characterized in that said optical means comprise crossed polarizers located on both sides of the cell, the reading being performed by birefringence.

4. Visualization device according to claim 2, characterized in that the optical means comprise a dichroitic pigment dissolved within the liquid crystal material and a polarizer.

5. Visualization device according to any of claims 1 to 4, characterized in that the electrodes of said sheets are arranged in lines (43) and columns (42) to define an addressing matrix.

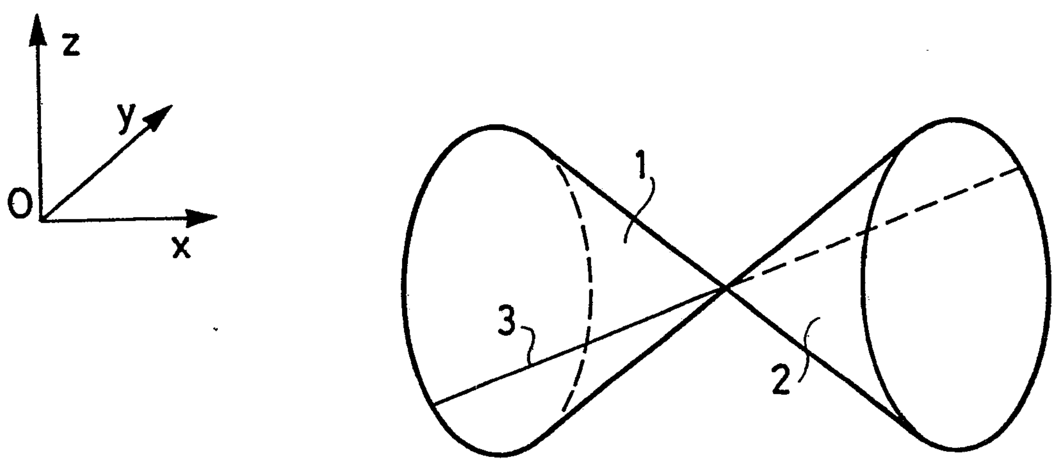


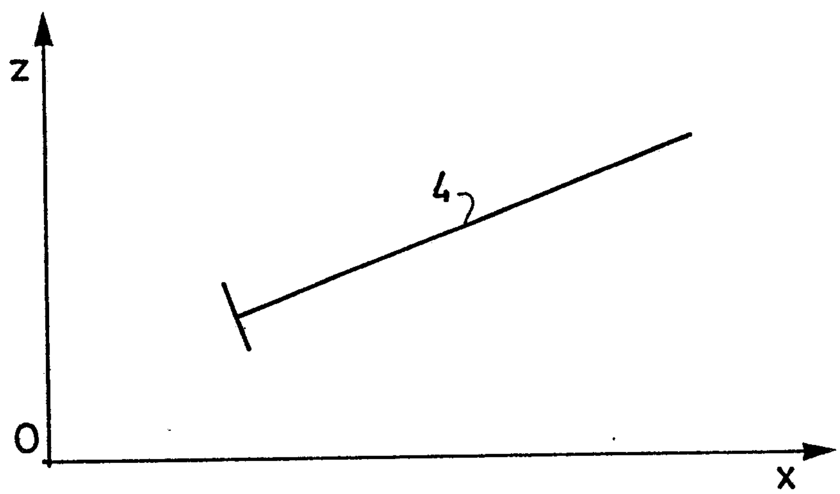


FIG.1

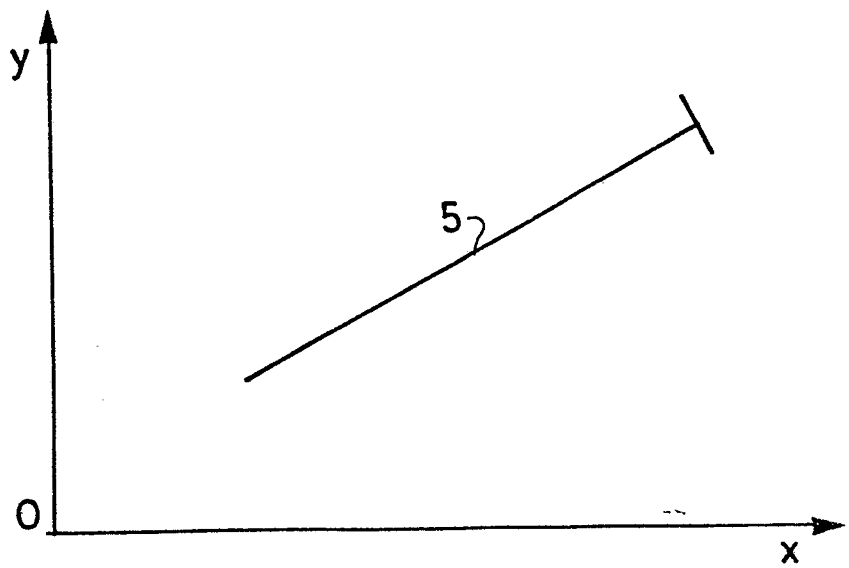

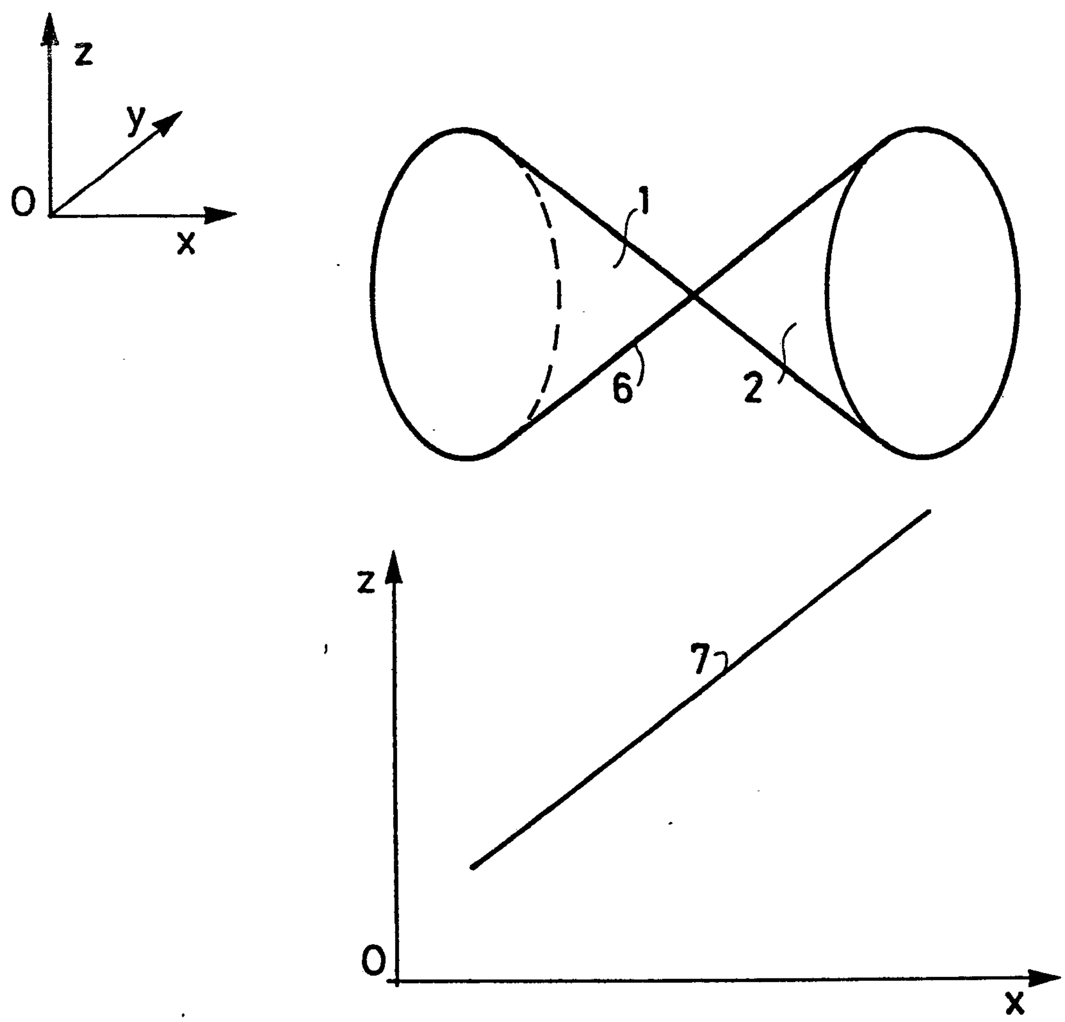


FIG.2

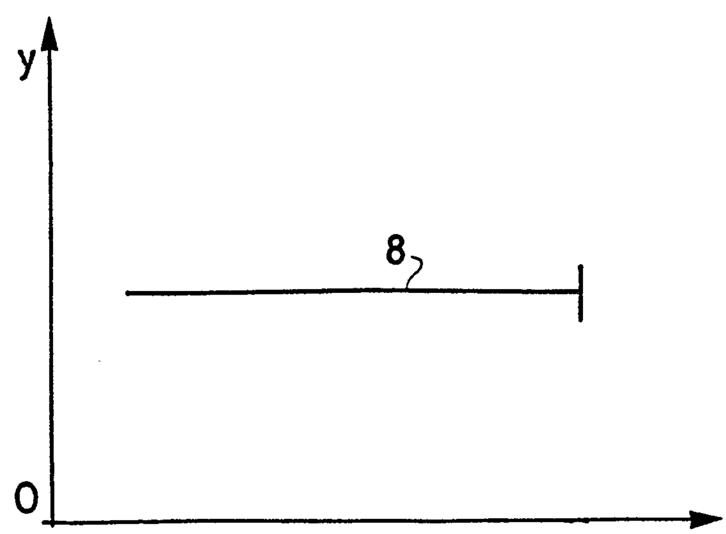

FIG.3

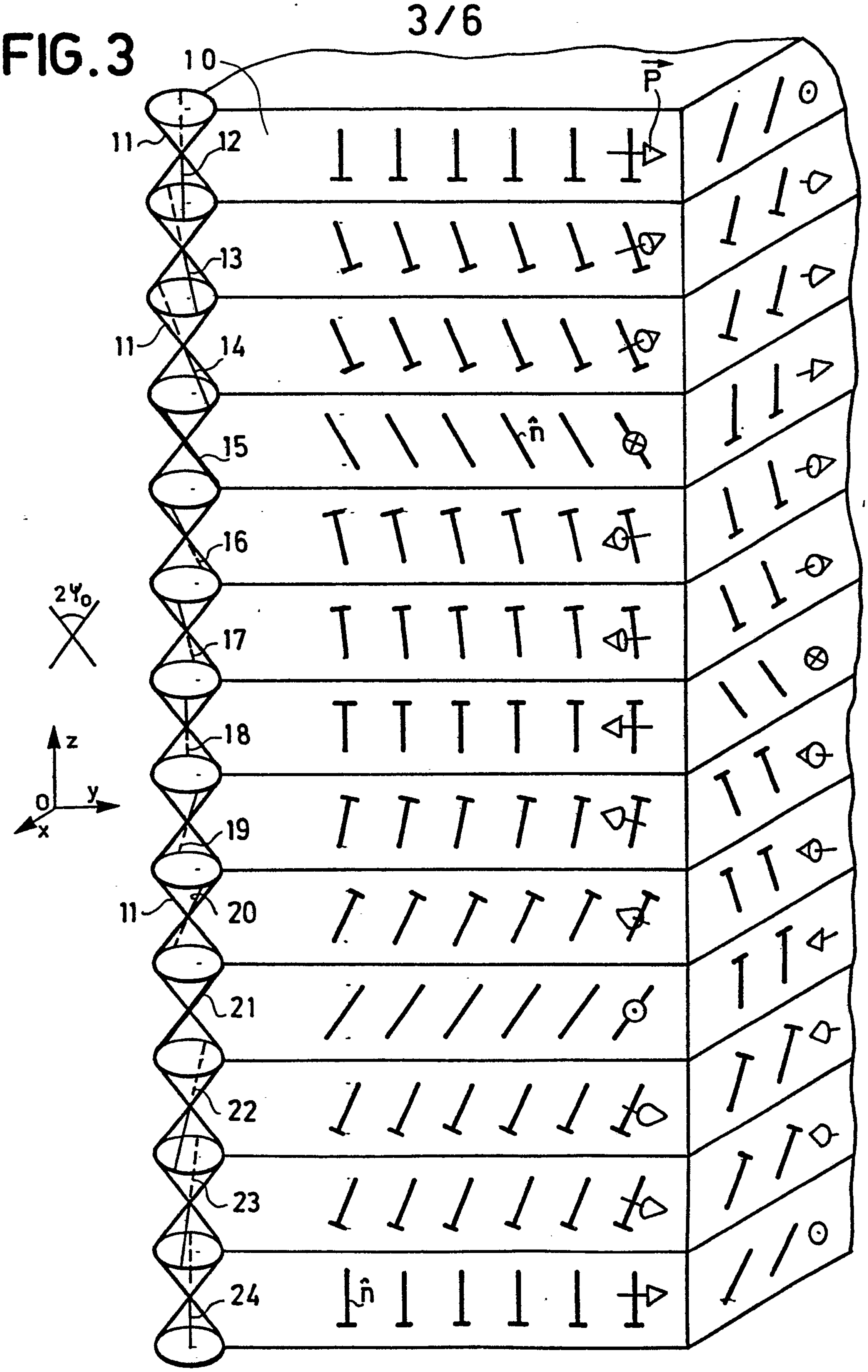

FIG. 4

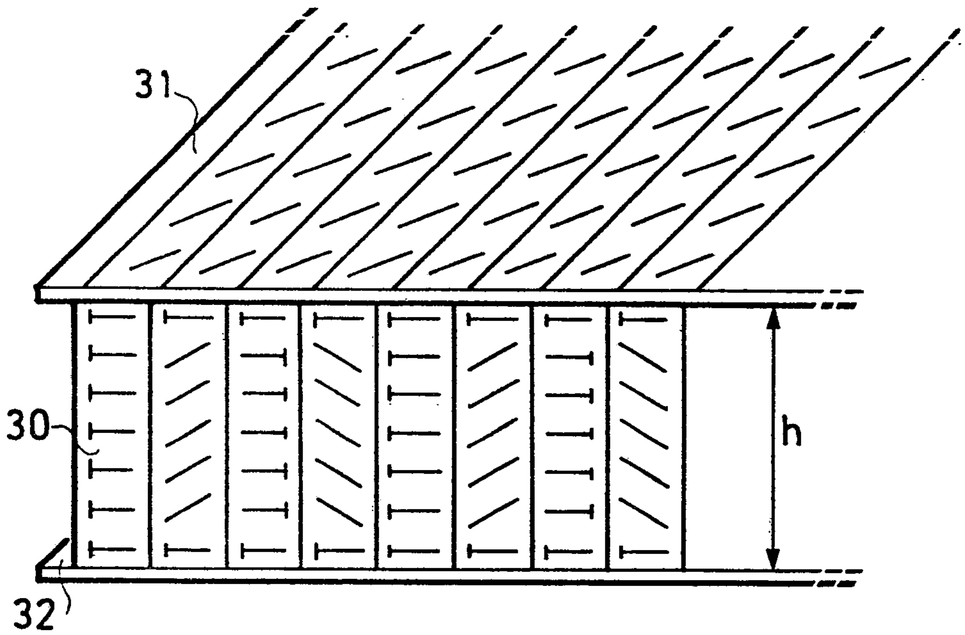


FIG.5

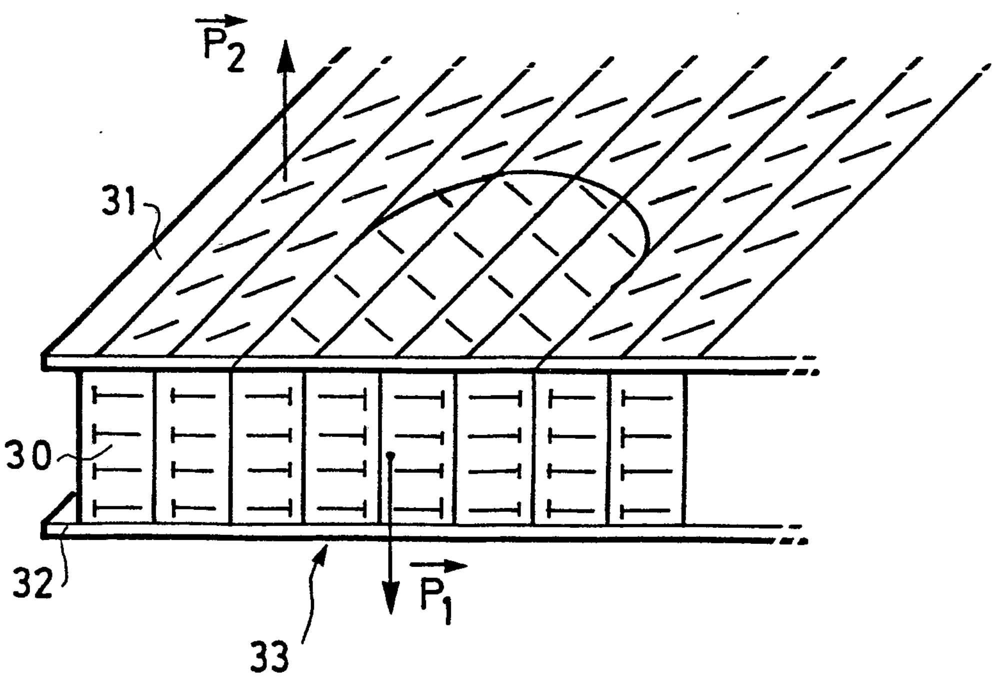

FIG.6

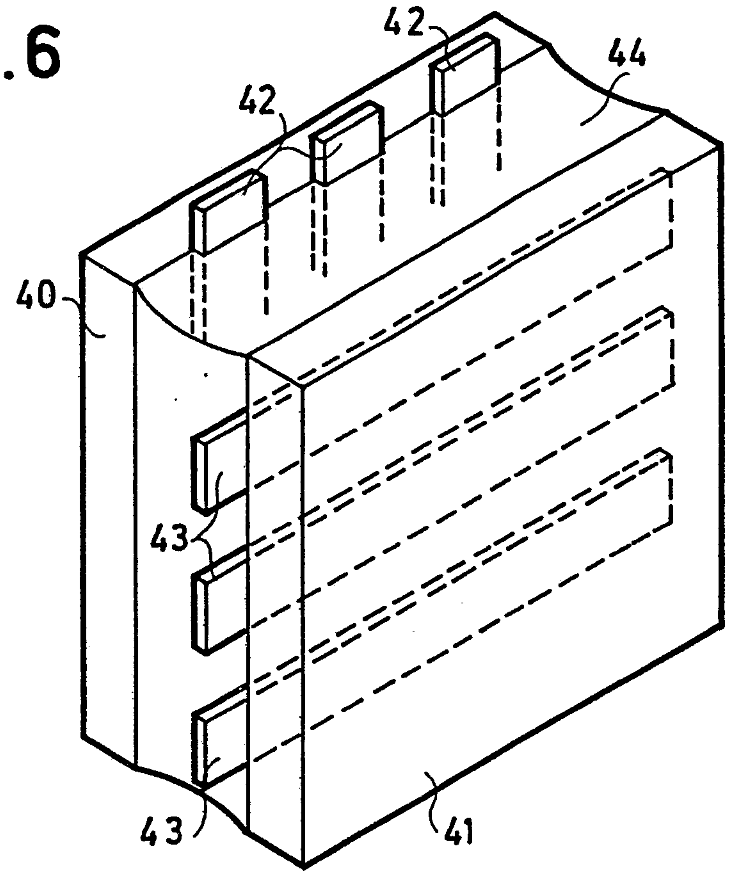
42
42
44
40
43
43
41

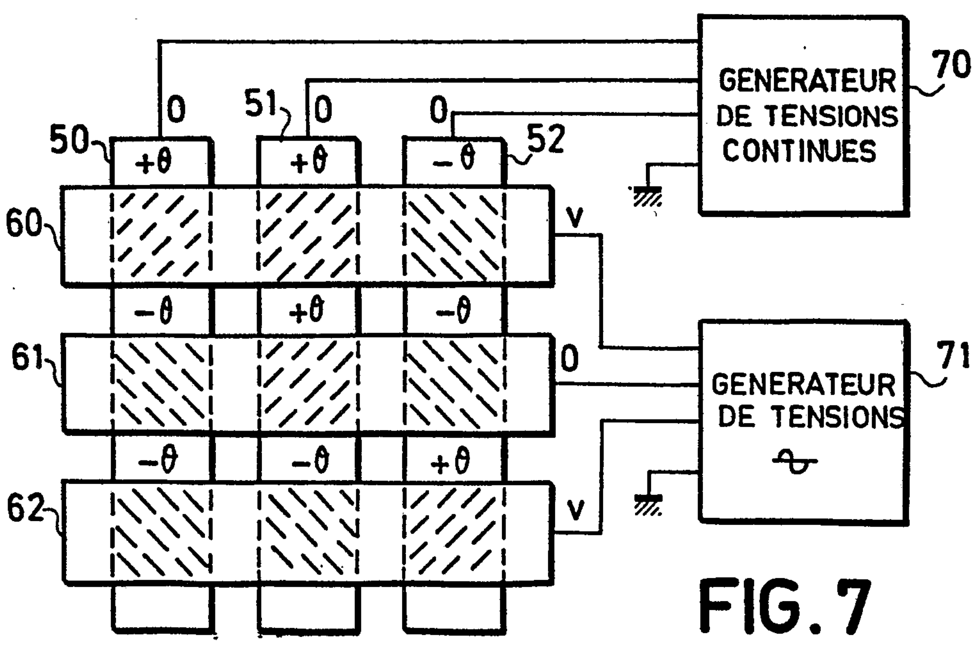
GENERATEUR DE TENSIONS CONTINUES
70
50
51
52
0
0
0
+θ
+θ
−θ
60
61
62
v
0
v
−θ
+θ
−θ
−θ
−θ
+θ
GENERATEUR DE TENSIONS
71

FIG.7

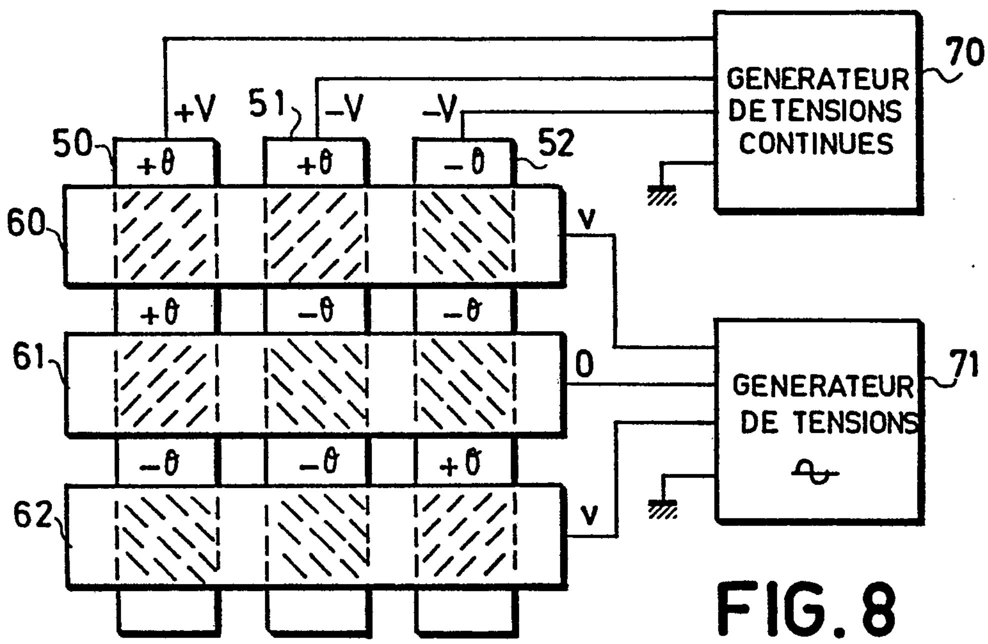
70
GENERATEUR
DE TENSIONS
CONTINUES
+V
51
-V
-V
50
+θ
+θ
-θ
52
60
v
+θ
-θ
-θ
61
0
GENERATEUR
DE TENSIONS
71
-θ
-θ
+θ
62
v

FIG. 8

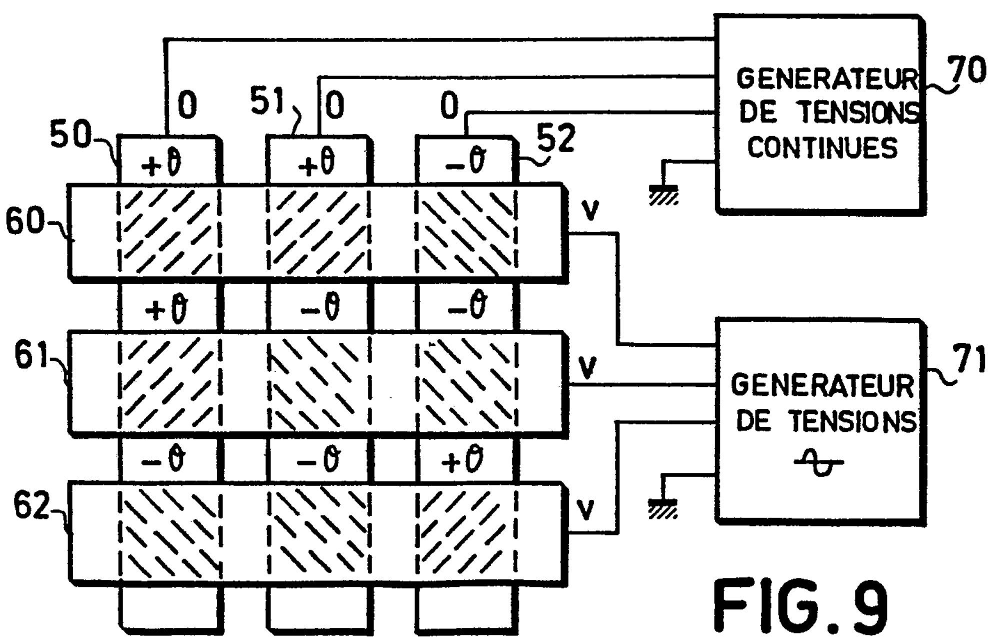
GENERATEUR
DE TENSIONS
CONTINUES
70
0
51
0
0
50
+θ
+θ
-θ
52
60
v
+θ
-θ
-θ
61
v
GENERATEUR
DE TENSIONS
71
-θ
-θ
+θ
62
v

FIG. 9